# EUROPEAN PATENT SPECIFICATION

(11) **EP 1 331 316 B1**
(45) Date of publication and mention of the grant of the patent: **27.06.2007**
(21) Application number: 03250347.6
(22) Date of filing: 21.01.2003
(51) Int. Cl.: E04B 1/76

(54) **Method for thermal insulation**
Verfahren zur Wärmedämung
Procédé pour isolation thermique

(30) Priority: 23.01.2002 GB 0201431
(43) Date of publication of application: 30.07.2003
(73) Proprietor: Thermal Economics Limited, Luton LU1 1PP (GB)
(72) Inventor: Brown, Hugo, 2553 A, The Hague (NL); Belanyi, Rudolf, Chiswick, London W4 3ER (GB)
(74) Representative: Coates, Ian Harold

(56) References cited:
- EP-A- 0 095 159
- DE-A- 3 530 973
- GB-A- 2 103 997
- GB-A- 2 376 206
- US-A- 2 238 022

## Description

### Field of the Invention

The present invention relates to a method of insulating a building having a frame construction and a frame building insulated according to said method. It is particularly applicable, but in no way limited, to the insulation of framed structures including timber frame and steel frame buildings.

### Background to the Invention

Buildings having a frame construction in which a supporting frame is constructed and then clad with brickwork, block work or other cladding material are well known, see document WO-A-0128770. There is generally a cavity between the external cladding and the frame, and insulating material is usually installed within the frame itself. The external and internal surfaces of the frame are covered by sheathing layers which retain this insulation in place. The internal surface of the frame carries a sheathing layer to take the internal building finishes. This type of building construction allows for a good deal of off-site pre-fabrication and can reduce time on-site significantly, when compared to conventional building methods. Frame buildings are thus becoming increasingly popular. The frame can be constructed from a range of materials including wood and steel.

As explained above, this type of building construction requires incorporation of a good deal of thermal insulation. In addition, a breathable waterproof barrier is required to prevent water penetration into the building interior whilst allowing water vapour to pass into and out of the structure.

A number of solutions have been developed to provide the necessary level of insulation whilst still allowing for the movement of water vapour. Traditionally, a vapour barrier is incorporated on the inner face of the inner sheathing layer and a water resistant breather membrane is positioned on the outer face of the outer sheathing layer. The frame volume is filled with an insulating blanket such as fibreglass or mineral wool. The outer, or breather membrane is designed to stop external water ingress but still allow the dissipation of water vapour. Most commonly it is made from a non-woven polymer textile. Micro-perforated sheeting has been tried but is generally not considered appropriate. The vapour barrier associated with the inner sheathing layer is designed to prevent or reduce water vapour ingress into the building. Typically this can be formed from a continuous polythene sheet.

A problem arises if improved insulation values are required. Since the frame is already packed with insulating material, a wider frame width would be required to achieve better insulation values. This would involve use of more frame material i.e. wood or steel, both of which are expensive. It would also involve changes to the production line where units are pre-fabricated. Both of these changes would lead to a significant increase in building costs.

An alternative would be to add an insulating membrane within the cavity. However, existing membranes have not performed well in this application and this route has generally been rejected by the building industry. Such membranes are usually formed from a laminate of aluminium foil and polyethylene, or some other sheet plastic material, and can include an air cushion layer. Whilst these membranes have good U values, they do not have the desired breathability for this type of application.

It is an objective of the present invention to overcome or mitigate some or all of these problems.

### Summary of the invention

According to a first aspect of the present invention there is provided a method according to claim 1.

Use of a textile layer instead of a polythene or other plastic sheet material to support the reflective layer provides improved insulation values and allows the building to breathe. Preferably the breathable textile layer comprises a non-woven textile.

In an alternative preferred embodiment the breathable textile layer comprises a woven textile.

In a particularly preferred embodiment the breathable textile layer comprises a fleece, and the fleece may be compressed.

The breathable textile layer may alternatively comprise felt or paper.

Preferably the textile layer is formed from a plastics material, which is particularly preferably selected from a group comprising:-
polypropylene
polyethylene
polyester
polyamide
polycarbonate
polyvinyl chloride
or mixtures thereof.

The reflective layer comprises a metallised layer, which particularly preferably comprises aluminium.

Preferably the reflective layer comprises aluminium in the form of foil, laminate or a veneer, or aluminium deposited by vapour deposition.

In a particularly preferred embodiment the reflective layer is applied to the textile in the form of a vacuum vaporised aluminium coating in a form which does not materially reduce the permeability/breathability of the textile layer.

The metallised layer is coated with a protective layer to protect the metal surface from damp.

The reflective layer may incorporate perforations, preferably micro perforations.

In a preferred embodiment, the insulating membrane comprises a non-woven polypropylene fleece having an aluminium layer deposited onto the textile by vapour deposition.

Preferably the surface emissivity coefficient of the insulating membrane is in the range 0.01 to 0.25, and preferably the water resistivity is in the range 0.05 to 1 MNsg⁻¹.

According to a second aspect of the invention there is provided a frame building insulated according to the method of the first aspect of the invention.

### Brief Description of the Drawings

Preferred embodiments to the present invention will now be more particularly described with reference to the following drawing in which:-
Figure 1 illustrates diagrammatically an insulating membrane used in the present invention stretched across the outer sheathing layer of a portion of a frame building within the cavity between the frame and the outer brickwork cladding;
Figure 2 illustrates a horizontal cross-section through a portion of frame construction insulated according to the method of the present invention.

### Description of the preferred embodiments

The preferred embodiments of the present invention will now be described by way of example only. They are not the only ways in which the invention can be put into practise but they are currently the best ways known to the applicant by which this can be achieved.

The building and construction industry is pre-disposed against the use of plastic-based reflective membranes in the cavities of frame construction buildings. The term frame construction in this context is intended to encompass constructions in which a structure is formed from a structural or load bearing frame clad in some weatherproof material. The frame is generally constructed from wood or steel or other material as selected by the material specialist. The internal and external surfaces of the frame are covered with a sheathing material to take internal finishes and to retain insulation within the frame. There is inevitably a cavity between the frame and the cladding.

Examples of this type of construction can be found in residential and small commercial buildings, portable buildings and caravans.

The pre-disposition against reflective membranes arises because of the poor breathablity of the prior art plastic-based membranes. It has unexpectedly been discovered that by incorporating a textile-type of reflective membrane on the external surface of the frame, i.e. within the cavity between the cladding and the frame, much improved insulation values can be achieved with no detrimental effects.

The nature and composition of the textile-containing membrane are important for this method to be effective. In its simplest form the membrane consists of two layers, a breathable textile layer and a reflective layer. The textile layer can be made from a wide range of woven or non-woven fabrics, felt or paper. The key requirements are that this layer should be highly breathable as compared to polythene or other plastic sheet materials.

The textile layer must have sufficient strength to support the reflective layer and to retain its integrity, even under damp conditions. Textiles made from man-made fibres have proven to be most suitable for this purpose and examples of suitable materials are polypropylene, polyethylene, polyester, polyamide, polycarbonate, polyvinyl chloride and mixtures thereof. It is not intended that this list should be exhaustive but rather give an indication of the type and breadth of fibres which can be used.

The reflective layer is generally formed by a metalised layer on one or both sides of the fabric layer. The technology required to produce laminated reflective insulation is known, for example from WO 99/60222 (PIRITYI), the entire text of which is incorporated herein by reference. The metalised layer is typically formed from aluminium which can be in the form of a foil or veneer or may be formed by vapour deposition. The metalised layer may or may not be coated with a layer of plastic or varnish to protect the metal surface from damp.

In a particular preferred embodiment the metalised layer is applied to the textile layer in the form a vacuum vaporised aluminium coating. The technology required to deposit aluminium in this form is known to the person skilled in the art. A metalized layer deposited in this way does not materially reduce the permeability/breathability of the textile layer.

Where a foil or veneer is used, the metalised layer may be micro-perforated to allow the passage of water vapour through the membrane but prevent the ingress of liquid water. Again such micro-perforation technology is known.

An example of a preferred membrane for use in this method consists of a compressed non-woven polypropylene fleece having an aluminium layer deposited onto the textile by vapour deposition.

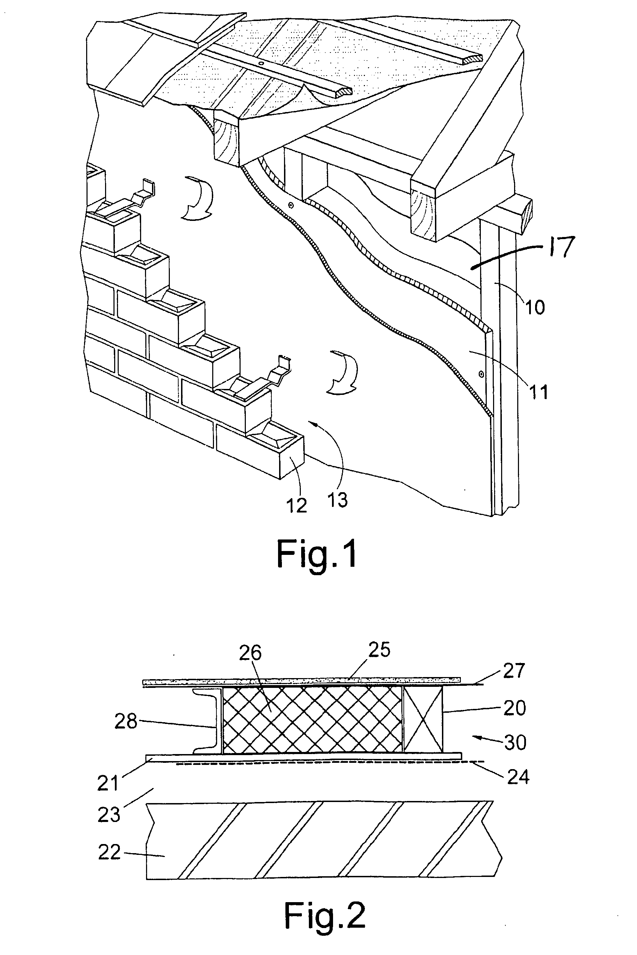

One application of this invention is illustrated in Figure 1. This illustrates a section of a timber frame building comprising a timber frame 10, outer sheathing board 11, outer cladding 12 and a cavity 13. An insulating, reflective breather membrane is installed against the sheathing board 11 exactly as a standard timber frame breather membrane would be. The foil surface of the breather membrane dramatically enhances the thermal value of the existing outer cladding.

Thus the method of the invention consists of the application of a thermally insulating breather membrane to the external surface of a timber frame construction as illustrated, for the purpose of allowing the dissipation of water vapour from the construction, whilst protecting it from rain water ingress, and at the same time, improving the thermal insulation of the construction by virtue of a low emissive coating on one or both faces of membrane.

The nature and composition of a membrane for use in this application have been described. The preferred physical characteristics of the membrane consists of a non-woven manmade (polymer) textile, with a vaporised or laminated aluminium surface coating on one or both sides, which will have a surface emissivity coefficient ranging from 0.01 to 0.25.

The water vapour resistance tested to BS3177:1959 lies in the range between 0.05MNsg⁻¹ and 1.0MNsg⁻¹ and passes "EOSIN" resistance to water penetration test to BS4016:1972.

A cross-sectional view, shown in Figure 2, also illustrates how the present method of insulation is applied. This illustrates a cladding layer 22 and a frame construction, shown as 30, separated by a cavity 23. The frame is constructed from metal studs 28 or timber studs 20, sandwiched between inner 25 and outer 21 sheathing layers. Whilst both metal and wooden studs are shown in this diagram this is for illustration purposes only. Generally one material or the other would be used throughout one section. Insulation 26 is packed into the space between the sheathing layers. A breather membrane 24 having the construction and properties described above is installed against the outer face of the outer sheathing layer in place of a conventional water resistant breather membrane.

### Supplementary information and key for figures

### Figure 1

The 'Timber Frame' solution to achieving U = 0.30 W/m²K (Scotland) or U = 0.35 W/m²K (England and Wales) as required in the new Thermal regulations for 2002 without increasing the thickness of your timber frame construction.

| | **Reference numeral** | **Description** |
|---|---|---|
| *Figure 1* | 17 | Standard vapour barrier or 'Thermasheet' reflective insulating vapour barrier |
| | | |
| *Figure 2* | 20 | Timber stud |
| | 21 | Outer sheathing |
| | 22 | Brick outer skin / cladding |
| | 23 | Cavity |
| | 24 | Water resistant breather membrane |
| | | (location of 'Therma Breathe') |
| | 25 | Inner sheathing |
| | 26 | Insulation between studs |
| | 27 | Vapour barrier (continuous polythene sheet) |
| | 28 | Metal stud |

## Claims

1. A method of insulating a building having a frame construction wherein the wall of said building comprises an outer cladding layer, a cavity, and a load bearing frame, **characterised in that** said method comprising the step of introducing into said cavity a breathable insulating textile membrane (24) comprising:-
(i) a breathable reflective layer comprising a metallised layer and wherein said metallised layer is coated with a protective layer to protect the metal surface from damp; and
(ii) a breathable textile layer
wherein the surface emissivity coefficient of the insulating membrane is in the range 0.01 to 0.25 and wherein the water vapour resistance of the membrane tested to BS3177:1959 is in the range between 0.05MNsg⁻¹ and 1.0MNsg⁻¹ and the membrane also passes "EOSIN" resistance to water penetration test to BS4016:1972.

2. A method according to Claim 1, wherein the breathable textile layer comprises a non-woven textile.

3. A method according to Claim 1, wherein the breathable textile layer comprises a woven textile.

4. A method according to any preceding Claim, wherein the breathable textile layer comprises a fleece.

5. A method as claimed in Claim 4, wherein the fleece is compressed.

6. A method according to Claim 1, wherein the breathable textile layer comprises felt.

7. A method according to Claim 1, wherein the breathable textile layer comprises paper.

8. A method according to any of Claims 1 to 6, wherein the breathable textile layer is formed from a plastics material.

9. A method according to Claim 8, wherein the plastics material is selected from the group comprising:-
polypropylene
polyethylene
polyester
polyamide
polycarbonate
polyvinyl chloride
or a mixture thereof.

10. A method according to any preceding claim wherein the metallised layer comprises aluminium.

11. A method according to Claim 10, wherein the aluminium is in the form of foil, laminate or a veneer, or is deposited by vapour deposition.

12. A method according to Claim 10, wherein the reflective layer is applied to the textile in the form of a vacuum vaporised aluminium coating in a form which does not materially reduce the permeability/breathability of the textile layer.

13. A method according to any preceding Claim, wherein the reflective layer incorporates perforations.

14. A method according to Claim 13, wherein the perforations are micro perforations.

15. A method according to Claim 2, wherein the insulating membrane comprises a non-woven polypropylene fleece having an aluminium layer deposited onto the textile by vapour deposition.

16. A method according to Claim 1, wherein some portion of the cavity separates the outer cladding layer from the membrane.

17. A frame building insulated according to the method of any preceding Claim.

## Patentansprüche

1. Verfahren zur Isolation eines Gebäudes mit einer Rahmenkonstruktion, bei der die Wand des Gebäudes eine äußere Verkleidungsschicht, einen Hohlraum und einen lasttragenden Rahmen umfasst, **dadurch gekennzeichnet, dass** das Verfahren den Schritt der Einführung einer atmungsaktiven isolierenden Textilmembran (24) in den Hohlraum umfasst, mit:
(i) einer atmungsaktiven reflektierenden Schicht, die eine metallisierte Schicht umfasst, wobei die metallisierte Schicht mit einer Schutzschicht beschichtet ist, um die Metalloberfläche gegen einen Beschlag zu schützen; und
(ii) einer atmungsaktiven Textilschicht;
wobei der Oberfläche-Emissionsvermögens-Koeffizient der isolierenden Membran in dem Bereich von 0,01 bis 0,25 ist, und wobei der Wasserdampf-Widerstand der Membran bei einem Test gemäß BS3177:1959 in dem Bereich zwischen 0,05MNsg⁻¹ und 1,0MNsg⁻¹ liegt und die Membran weiterhin den "EOSIN" Test gemäß BS4016:1972 auf Widerstand gegen Wasserdurchdringung besteht.

2. Verfahren nach Anspruch 1, bei dem die atmungsaktive Textilschicht ein nicht gewebtes Textilmaterial umfasst.

3. Verfahren nach Anspruch 1, bei dem die atmungsaktive Textilschicht ein gewebtes Textilmaterial umfasst.

4. Verfahren nach einem der vorhergehenden Ansprüche, bei dem die atmungsaktive Textilschicht eine Vliesschicht umfasst.

5. Verfahren nach Anspruch 4, bei dem das Vliesmaterial komprimiert ist.

6. Verfahren nach Anspruch 1, bei dem die atmungsaktive Textilschicht Filz umfasst.

7. Verfahren nach Anspruch 1, bei dem die atmungsaktive Textilschicht Papier umfasst.

8. Verfahren nach einem der Ansprüche 1 bis 6, bei dem die atmungsaktive Textilschicht aus Kunststoffmaterial gebildet ist.

9. Verfahren nach Anspruch 8, bei dem das Kunststoffmaterial aus der Gruppe ausgewählt ist, die folgendes umfasst:
Polypropylen
Polyethylen
Polyester
Polyamid
Polycarbonat
Polyvinylchlorid
oder einer Mischung hiervon.

10. Verfahren nach einem der vorhergehenden Ansprüche, bei dem die metallisierte Schicht Aluminium umfasst.

11. Verfahren nach Anspruch 10, bei dem das Aluminium in Form einer Folie, eines Laminats oder eine Überzugs vorliegt oder durch Dampfabscheidung abgeschieden ist.

12. Verfahren nach Anspruch 10, bei dem die reflektierende Schicht auf das Textilmaterial in der Form einer im Vakuum aufgedampften Aluminiumbeschichtung in einer Form aufgebracht ist, die nicht Wesentlich die Permeabilität/Atmungsaktivität der Textilschicht verringert.

13. Verfahren nach einem der vorhergehenden Ansprüche, bei dem die reflektierende Schicht Perforationen einschließt.

14. Verfahren nach Anspruch 13, bei dem die Perforationen Mikro-Perforationen sind.

15. Verfahren nach Anspruch 2, bei dem die isolierende Membran ein nicht gewebtes Polypropylen-Vlies mit einer Aluminiumschicht umfasst, die auf dem Textilmaterial durch Aufdampfen im Vakuum abgeschieden ist.

16. Verfahren nach Anspruch 1, bei dem ein Teil des Hohlraums die äußere Verkleidungsschicht von der Membran trennt.

17. Rahmen-Gebäude, das nach einem Verfahren nach einem der vorhergehenden Ansprüche isoliert ist.

## Revendications

1. Procédé d'isolation d'un bâtiment ayant une charpente, dans lequel le mur dudit bâtiment comprend une couche de recouvrement externe, une cavité, et une charpente porteuse, **caractérisé en ce que** ledit procédé comprend l'étape consistant à introduire dans ladite cavité une membrane de textile isolante perméable à l'air (24) comprenant :
(i) une couche réfléchissante perméable à l'air comprenant une couche métallisée et dans laquelle ladite couche métallisée est revêtue d'une couche protectrice pour protéger la surface métallique de l'humidité ; et
(ii) une couche de textile perméable à l'air ;
dans lequel le coefficient d'émissivité de surface de la membrane isolante est dans la plage comprise entre 0,01 et 0,25 et dans lequel l'étanchéité à la vapeur d'eau de la membrane testée selon BS3177 : 1959 est dans la plage comprise entre 0,05MNsg⁻¹ et 1,0MNsg⁻¹ et la membrane passe également avec succès le test "EOSIN" d'étanchéité vis à vis de la pénétration de l'eau selon BS4016 : 1972.

2. Procédé selon la revendication 1, dans lequel la couche de textile perméable à l'air comprend un textile non tissé.

3. Procédé selon la revendication 1, dans lequel la couche de textile perméable à l'air comprend un textile tissé.

4. Procédé selon l'une quelconque des revendications précédentes, dans lequel la couche de textile perméable à l'air comprend un molleton.

5. Procédé tel que revendiqué dans la revendication 4, dans lequel le molleton est comprimé.

6. Procédé selon la revendication 1, dans lequel la couche de textile perméable à l'air comprend du feutre.

7. Procédé selon la revendication 1, dans lequel la couche de textile perméable à l'air comprend du papier.

8. Procédé selon l'une quelconque des revendications 1 à 6, dans lequel la couche de textile perméable à l'air est formée d'un matériau à base de plastiquse.

9. Procédé selon la revendication 8, dans lequel le matériau à base de plastiques est choisi dans le groupe comprenant :
du polypropylène
du polyéthylène
du polyester
du polyamide
du polycarbonate
du polychlorure de vinyle
ou un mélange de ceux-ci.

10. Procédé selon l'une quelconque des revendications précédentes, dans lequel la couche métallisée comprend de l'aluminium.

11. Procédé selon la revendication 10, dans lequel l'aluminium est sous la forme d'une feuille, d'un stratifié ou d'un placage, ou est déposé par dépôt en phase vapeur.

12. Procédé selon la revendication 10, dans lequel la couche réfléchissante est appliquée au textile sous la forme d'un revêtement d'aluminium vaporisé sous vide sous une forme qui ne réduit pas de façon considérable la perméabilité/ la perméabilité à l'air de la couche de textile.

13. Procédé selon l'une quelconque des revendications précédentes, dans lequel la couche réfléchissante incorpore des perforations.

14. Procédé selon la revendication 13, dans lequel les perforations sont des micro-perforations.

15. Procédé selon la revendication 2, dans lequel la membrane isolante comprend un molleton de polypropylène non tissé ayant une couche d'aluminium déposée sur le textile par dépôt en phase vapeur.

16. Procédé selon la revendication 1, dans lequel une certaine partie de la cavité sépare la couche de recouvrement externe de la membrane.

17. Bâtiment ayant une charpente isolée selon le procédé selon l'une quelconque des revendications précédentes.
